# EUROPEAN PATENT SPECIFICATION

(11) **EP 1 384 576 B1**
(45) Date of publication and mention of the grant of the patent: **09.11.2005**
(21) Application number: 02016607.0
(22) Date of filing: 25.07.2002
(51) Int. Cl.: B32B 27/08, C08J 11/06, B29B 17/00

(54) **Gas-barrier thermoplastic film and substrate/film composite material**
Thermoplastische Gassperrfolie und Substrat-Folienverbundmaterial
Film de barrière au gaz thermoplastique et matériau composite d'un substrat et le film

(43) Date of publication of application: 28.01.2004
(73) Proprietor: Cryovac, Inc., Duncan, S.C. 29334-0464 (US)
(72) Inventor: Longo, Eugenio, 20017 Passirana di Rho (MI) (IT); Della, Bianca Serena, 20017 Rho (MI) (IT)
(74) Representative: De Carli, Elda

(56) References cited:
- EP-A- 0 707 955
- GB-A- 2 288 177
- US-A- 4 868 052
- US-A- 4 894 291
- US-A- 5 049 449
- US-A- 5 171 640
- US-A- 5 462 794

## Description

The present invention relates to a new multi-layer gas-barrier thermoplastic film particularly suitable for use as a gas-barrier heat-sealable liner for polystyrene based sheets and to the composite material comprising a polystyrene based sheet lined with the new multi-layer gas-barrier film.

The present invention is also directed to the use of said composite material for the manufacture of gas-barrier receptacles or supports, such as gas-barrier foamed polystyrene trays or gas-barrier foamed polystyrene backings, for use in food packaging processes and to the trays and backings obtained thereby.

### BACKGROUND OF THE INVENTION

Styrene based polymers are widely used in food packaging applications.

In particular, foamed polystyrene backings and trays are widely employed world-wide to contain and display any type of food products, from fresh red meat, to poultry, processed meat, cheese, and the like products.

Polystyrene foam trays are typically manufactured in a two-stage process involving a foam extrusion step and a thermoforming step. A considerable amount of scrap, particularly in terms of volume but also in terms of weight, is generated in this process, mainly in the thermoforming step. Extrusion scrap is typically in foam sheet form and results essentially from machine start-ups. Thermoforming scrap is primarily trim scrap, the skeleton remaining after the trays are cut from the foam sheet, and the trays rejected for quality control criteria. When the scrap generated is of polystyrene only (i.e. in the case of simple, non heat-sealable, non gas-barrier, material), reprocessing of said scrap is easily accomplished by grinding, pelletizing and recycling it in the foam extrusion process.

On the other hand gas-barrier properties for a packaging material have become extremely important. By using gas-barrier packaging material, it is in fact possible to package the food product either under vacuum, such as in a VSP (Vacuum Skin Packaging) package or under a modified atmosphere especially designed to increase the shelf life of the packaged product. It is thus possible for instance to prepare suitable food packages, e.g. fresh or processed meat packages, at a central unit and then distributing them to supermarkets and small shops.

It has therefore become very common to combine the foam polystyrene sheet with a multi-layer thermoplastic film comprising a gas-barrier layer in order to provide the end composite material, and the receptacles obtained therefrom, with the desired gas-barrier properties. The gas-barrier thermoplastic film will typically comprise at least an outer heat-sealing layer (that will be the layer in contact with the product to be packaged and that needs to be heat-sealable to allow sealing of a gas-barrier cover film to the receptacle outer layer), a core gas-barrier layer comprising EVOH and/or a polyamide, and an outer bonding layer (that will be the layer closer to the polystyrene substrate).

The substrate/film composite material is typically obtained by lamination of the polystyrene substrate with the multi-layer gas-barrier film or by extrusion-coating of the polystyrene substrate with the multi-layer gas-barrier film. The obtained substrate/film composite can then be converted into the desired trays or backings of the desired size and shape by conventional thermoforming and/or cutting procedures.

Alternatively, this could also be obtained using less common technique, such as by coextruding the polystyrene material with the resins of the multi-layer gas-barrier film and foaming only the selected layer(s) or by coating/laminating the pre-formed trays or backings of foamed polystyrene with the gas-barrier multi-layer film.

In any case the scrap obtained from these gas-barrier substrate/film composites is extremely difficult to recycle because the different thermoplastic materials are often incompatible with each other (e.g., the high level of polyolefins typically present in the conventional gas-barrier liners, or the low level of EVOH or polyamides optionally present as the barrier layer in said liners, are incompatible with the polystyrene matrix). This incompatibility leads to mixtures of resins with poor mechanical properties, such as impact strength, tensile strength, and elongation at break, what may create real problems when too high percentages of scrap are recycled.

In US-A-5,118,561 the process of recycling reclaim material of a laminate of a foamed polymer sheet with a PVDC-free gas-barrier layer is described. As there reported, the amount of material that could be recycled was comprised between 0.001 % by weight and a maximum of 50 % by weight. Actually however, with the conventional gas-barrier film compositions, using a percentage of reclaim in the foamed polystyrene over 40 % sometimes leads to a modification of the internal foam structure with some sort of cell deformation. Furthermore in most of the processes actually employed for the manufacture of trays or backings of foamed polystyrene/gas-barrier film composite material, the amount of scrap that is generated is above 50 % by weight, and typically is up to about 60-65 % by weight with respect to the weight of the substrate. This means that with the conventional gas-barrier liners not all the scrap generated in the process could be directly recycled and that at least part of it should be collected, transported and either disposed of or recycled in some other production line.

Several approaches have been described in the literature to avoid the incompatibility problem and allow to directly recycle all the scrap that is generated in a close-loop process.

In one possible approach the barrier film is separated from the foamed polystyrene substrate by delamination and then the substrate and the film are recycled separately, wherein the film is recycled in a separate bulk layer of the gas-barrier film or in a separate layer bonding the substrate to the film. This approach has the evident disadvantage of the additional work-up required to delaminate the scrap that would not be acceptable on industrial scale. Furthermore if, in order to ease delamination of the scrap, the film is designed to have a poor bond to the polystyrene substrate, problems of spontaneous delamination during further processing or use of the composite material do occur.

In another approach the scrap is divided and recycled in different sections of the composite, i.e. part in the substrate, part in the liner and possibly part in a layer bonding the two. While this is a viable option, the overall process becomes more complicated and furthermore more expensive as the manufacture of the substrate will anyway require a large proportion of virgin resin.

In still another possible approach "compatibilizers" are employed. Compatibilizers such as styrene-ethylene-co-butylene-styrene block copolymers (e.g., Kraton™ by Shell or Styrolux™ by BASF) have been suggested. It appears however that these compatibilizers do not work with all the resins and that in particular they do not work to compatibilize polystyrene with EVOH or polyamides.

Foam polystyrene/gas-barrier film composites with a bonding layer of styrene-butadiene or styrene-acrylonitrile copolymer are described EP-A-707,955. In this document the styrene containing bonding layer is used to reduce blister formation at the foam/film interface. It has been found however that an increase in the overall amount of styrene containing material, as provided by this bonding layer, helps compatibilizing polyolefins, such polyethylenes and EVA, with the polystyrene matrix but does not compatibilize EVOH with polystyrene and that therefore it does not allow to increase the reclaim level in the foamed polystyrene substrate.

US-A-5,171,640 describes thick laminates that can be useful for the manufacture of e.g. drinking glasses. Said laminates comprise a layer of EVOH that can be a core or an outer layer, an outer layer of a styrene-maleic anhydride copolymer, and a third layer of a co-polymer of ethylene and maleic anhydride, optionally containing also an alkyl acrylate as a third monomer. The adhesion between the layers in these laminates is claimed to be excellent and the laminates to have good temperature resistance and good mechanical properties.

GB-A-2,288,177 relates to new adhesive formulations particularly suitable to bind a layer of polystyrene, polycarbonate or polyester to a layer of polyolefins, EVOH, polyamides or polyesters and to the coextruded multilayer composites where these formulations are used as an adhesive layer. Composites with an outer polystyrene layer are stated to be commonly employed for food containers, such as cups, pots, and the like or for films such as thermoformed or heat-sealed lids. The examples of GB-A- 2,288,177 refer to a five layer general structure Impact polystyrene/binder/EVOH/binder/LDPE with a thickness of about 800 µm, where only the composition of the binder is varied."

### SUMMARY OF THE PRESENT INVENTION

It has now been found that when a gas-barrier film is used which contains an amount of styrene-based polymer of at least 35 % by weight, where at least part of said styrene-based polymer is in the form of a modified styrene-based resin, it is possible to manufacture a polystyrene/gas-barrier film composite with gas-barrier and heat-sealability properties comparable to the composites described in the literature and actually on the market, and where the polystyrene substrate may contain up to 100 % of reclaim material of the composite itself.

It has also been found that when gas-barrier liners are employed that, according to the present invention, contain an amount of styrene-based polymer of at least 35 % by weight, where at least part of said styrene-based polymer is in the form of a modified styrene-based resin, it is also possible to avoid any blistering effect throughout the overall structure, even with low thickness liners.

In a first aspect the present invention is therefore directed to a gas-barrier multi-layer film, having an overall thickness comprised between 10 and 100 µm, comprising at least an outer heat-sealable polyolefin layer, a core gas-barrier layer comprising one or more of EVOH and/or polyamides, and an outer bonding layer comprising one or more styrene-based polymers, said film being characterized in that
- at least 35 % by weight, preferably at least 38 % by weight and even more preferably at least 40 % by weight of the overall film is of styrene-based polymers,
- at least part of these "styrene-based polymers" are in the form of modified styrene-based polymers, and
- said modified styrene-based polymers are present in a ratio, with respect to the weight of the gas-barrier resin of the core layer, of at least 0.1 : 1, preferably at least 0.3 : 1, and even more preferably at least 0.5 : 1.

In a second aspect, the present invention is directed to a substrate/film composite comprising a substrate comprising styrene-based polymers and a gas-barrier multi-layer film as defined above, bonded together. In a preferred embodiment of the invention in the composite aspect, the substrate comprises foamed polystyrene.

In another preferred embodiment of the invention in the composite aspect, the substrate contains from about 0.001 % up to about 100 % by weight of reclaim of the composite of the invention.

In further specific aspects, the present invention refers to the use of said composite material in the manufacture of gas-barrier receptacles or supports for use in food packaging processes and to the trays and backings obtained thereby.

### BRIEF DESCRIPTION OF THE DRAWINGS

Fig. 1, Fig. 2, and Fig. 3 are cross-sectional views of three different embodiments of a multi-layer gas-barrier film according to the present invention;
Fig. 4 is the cross-sectional view of a substrate/film composite of the present invention using the film of the embodiment of Fig. 2;
Fig. 5 and Fig. 6 are cross-sectional views of two different embodiments of the substrate/film composites of the present invention using the film of the preferred embodiment of Fig. 3;
Fig. 7 is a cross-sectional view of a part of a tray obtained from the composite of Fig. 5 according to the present invention;
Fig. 8 shows a cross-sectional reduced view of a package obtained using a backing of the composite of Fig. 4 according to the present invention.

### DETAILED DESCRIPTION OF THE INVENTION

As used herein, the term "core", and the phrase "core layer", as applied to the multilayer gas-barrier film refers to any internal film layer which has a primary function other than serving as an adhesive for adhering two layers to one another.

As used herein, the phrase "outer layer" in connection with the multi-layer film refers to a layer having only one of its principal surfaces directly adhered to another layer of the film.

As used herein the term "directly adhered" as applied to a composite comprising a substrate and at least one film, and as applied to the layers of a multi-layer film, refers to the adhesion of a first element to a second element, without an adhesive, a tie layer or any other layer therebetween. In contrast, as used herein, the word "adhered" when used without the adverb "directly", broadly refers to the adhesion of a first element to a second element either with or without an adhesive, a tie layer or any other layer therebetween.

As used herein the term "liner" in connection with the substrate/film composite of the present invention is used to refer to the gas-barrier film that is laminated or otherwise conformably bonded to the upper surface of the substrate and that will be in contact with the food packaged using the composite of the invention.

As used herein the term "polystyrene" is intended to include both homo-polymers of styrene or alkyl-substituted styrene, such as polystyrene, poly(alpha-methylstyrene), and poly(p-methylstyrene), high impact polystyrene (HIPS), and co-polymers containing styrene or alkyl-substituted styrene units in an amount of at least 75 % by weight, based on the weight of the copolymer.

As used herein the term "high impact polystyrene" or "HIPS" refers to a polystyrene resin which contains up to 20 % of an impact modifier. Impact modifiers are known and include rubber or elastomeric compounds. These compounds are typically dispersed in the base polystyrene matrix as small particles. The impact modifiers include homopolymers or copolymers of butadiene, isoprene, arid ethylene-propylene diene copolymers. Polybutadiene is often the preferred modifier and is somewhat cross-linked. HIPS resins and HIPS sheets, including oriented and heat-set sheets of monolayer HIPS, are commercially available from many different suppliers.

As used herein the term "styrene-based polymer" is intended to refer to any type of homopolymer or co-polymer containing a major proportion of styrene units. This term thus includes e.g., polystyrene, poly(alpha-methylstyrene), poly(p-methylstyrene), high impact polystyrene, ethylene-styrene copolymers, styrene-acrylonitrile copolymers, styrene-acrylic acid copolymers, styrene-methacrylic acid copolymers, the block co-polymers of styrene with a conjugated diene, the partially hydrogenated derivatives thereof, any blend thereof and the modified derivatives thereof.

As used herein the term "modified styrene-based polymers", is intended to refer to those styrene-based polymers which are modified by the presence of a polar group that may be grafted onto the polymer backbone or co-polymerised therewith. Suitable polar groups are the unsaturated carboxylic acids (e.g., maleic acid, fumaric acid), and the functional derivatives thereof, such as the corresponding anhydrides, esters, or salts.

As used herein the term "polyolefin" refers to any polymerized or co-polymerised olefin that can be linear, branched, or cyclic, substituted or unsubstituted, and possibly modified. Resins such as polyethylene, ethylene-α-(C₄-C₈)olefin copolymers, polypropylene, ethylene-propylene copolymers, ethylene-propylene- α- (C₄-C₈)olefin ter-polymers, propylene-butene copolymer, polybutene, poly(4-methyl-pentene-1), ethylene-propylene rubber, butyl rubber, as well as copolymers in which the olefin monomer predominates such as ethylene-vinyl acetate copolymers, ethylene-acrylic acid copolymers, ethylene-alkyl acrylate copolymers, ethylene-methacrylic acid copolymers, ethylene-alkyl methacrylate copolymers, ethylene-alkyl acrylate-maleic anhydride copolymers, ionomers, as well the blends thereof in any proportions are all included. Also included are the modified polyolefins, where the term modified is intended to refer to the presence of polar groups in the polymer backbone. The above polyolefin resins can be "heterogeneous" or "homogeneous", wherein these terms refer to the catalysis conditions employed and as a consequence thereof to the particular distribution of the molecular weight, branched chain size and distribution along the polymer backbone, as widely known in the art.

As used herein the term "ethylene-α-(C₄-C₈)olefin copolymers" is intended to refer to both heterogeneous or homogeneous (e.g., "single site", or "metallocene") materials with densities of from about 0.87 to about 0.940 g/cm³.

As used herein the term "EVOH" refers to ethylene-vinyl alcohol copolymers, that are generally obtained as the saponification products of ethylene-vinyl acetate copolymers, wherein the ethylene content is typically comprised between 20 and 60 % by mole, preferably between 25 and 55 % by mole, and the degree of saponification is generally higher than 85 %, preferably higher than 95 %.

As used herein the term "polyamide" refers to high molecular weight polymers having amide linkages along the molecular chain, and refers more specifically to synthetic polyamides such as nylons. Such term encompasses both homo-polyamides and co-(or ter-) polyamides. It also specifically includes aliphatic polyamides or co-polyamides, aromatic polyamides or co-polyamides, and partially aromatic polyamides or co-polyamides, modifications thereof and blends thereof. The homo-polyamides are derived from the polymerization of a single type of monomer comprising both the chemical functions which are typical of polyamides, i.e. amino and acid groups, such monomers being typically lactams or aminoacids, or from the polycondensation of two types of polyfunctional monomers, i.e. polyamines with polybasic acids. The co-, ter-, and multi-polyamides are derived from the copolymerization of precursor monomers of at least two (three or more) different polyamides. As an example in the preparation of the co-polyamides, two different lactams may be employed, or two types of polyamines and polyacids, or a lactam on one side and a polyamine and a polyacid on the other side.

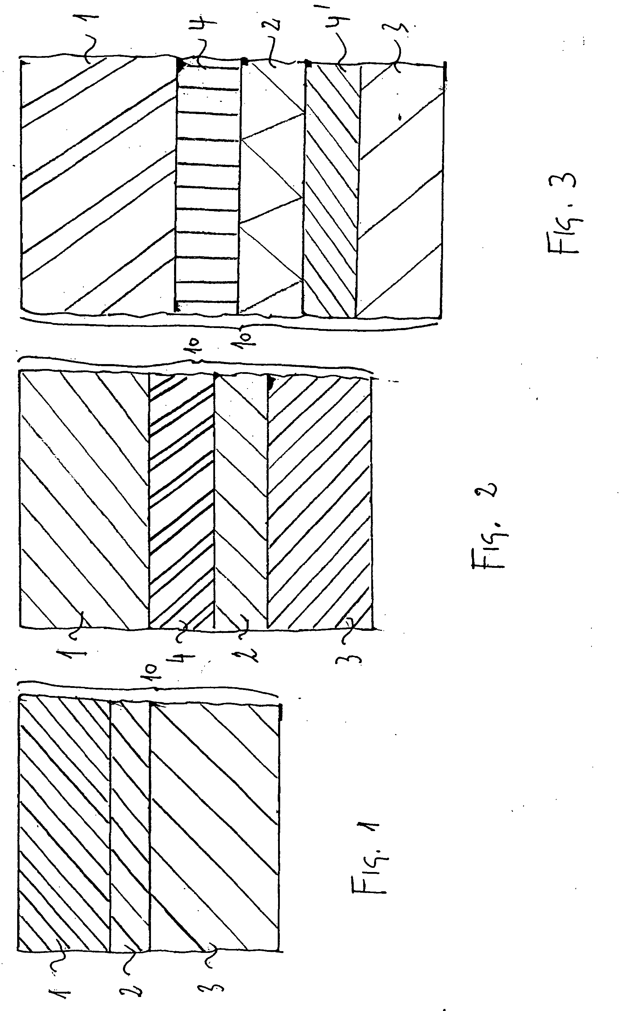

With reference to Fig. 1 the gas-barrier multi-layer film 10 according to the present invention comprises at least three layers : an outer heat-sealable polyolefin layer 1, a core gas-barrier layer 2 comprising one or more of EVOH and/or polyamides, and an outer bonding layer 3 comprising one or more styrene-based polymers.

The heat-sealable layer 1 of the multi-layer film is the layer that in the end substrate/film composite will serve as a food contact layer. Typical examples of materials suitable for said heat-sealable polyolefin layer are preferably ethylene homo-polymers, homogeneous and heterogeneous ethylene-α-olefin copolymers, ethylene-vinyl acetate copolymers, ionomers, etc., as well as blends of these polymers in any proportions. Suitable blends may also include peelable blends as known in the art to provide the end package formed with the composite with an easy-to-open feature.

The thickness of the polyolefin heat-sealable layer 1 will not be more that 50 %, preferably not more than 45 %, and even more preferably not more than 40 % of the thickness of the overall film. It will preferably be at least about 4 µm, more preferably at least about 6 µm, and even more preferably at least about 8 µm thick.

The gas-barrier layer 2 - as indicated - may comprise one or more EVOH and/or one or more polyamide components, as known in the art. As the oxygen permeability of polyamides is generally higher than that of EVOH, the barrier layer will comprise only polyamides or polyamides blended with a minor amount of EVOH whenever medium gas-barrier properties are required, while when high gas barrier properties are required, EVOH, possibly blended with up to 20 %, preferably up to 10 %, of polyamides, will preferably be employed. The thickness of said barrier layer will depend on the barrier properties desired for the end film and composite. More particularly its thickness will be set in order to provide the overall multi-layer film and the end substrate/film composite with the desired Oxygen Transmission Rate (OTR) (evaluated by following the method described in ASTM D-3985 and using an OX-TRAN instrument by Mocon). For high gas barrier films an OTR lower than 50, preferably lower than 10, and even more preferably lower than 5 cm³/m².d.atm, when measured at 23 °C and 0 % of relative humidity is generally required. Typically, when EVOH is employed as the gas-barrier material, optionally blended with up to 20 % by weight of a polyamide, this is achieved with barrier layers from about 2 to about 12 µm thick.

While in most of the embodiments a tie layer improving the adhesion between the gas-barrier layer 2 and the heat-sealable layer 1 is required (as discussed in detail below with reference to the embodiment of Fig. 2), in some instances this is not necessary and the two layers can adhere with a sufficient bond even in the absence of an intermediate tie layer. As an example when the heat-sealable layer 1 comprises ethylene-vinyl acetate, optionally blended with modified ethylene vinyl acetate, or when the heat-sealable layer 1 comprises an ionomer and the gas-barrier layer 2 comprises EVOH, it is not necessary to provide for a tie layer between the two.

The third layer of film 10 indicated in Fig. 1 is an outer bonding layer 3 of one or more styrene-based polymers as defined above.

Preferred styrene-based polymers suitable for this bonding layer would be the styrene copolymers and the modified derivatives thereof. More preferred would be the styrene block copolymers and the modified derivatives thereof. The block copolymers may be diblock, triblock, or multiblock polymers. Throughout this specification and claims these terms are to be given their normal meaning as defined in the literature such as in the Polymer Science Dictionary, Ed. Mark Alger, second edition 1997, Chapman & Hall, pp.50-51. Such block copolymers may contain various ratio of the conjugated diene to the styrene units. Accordingly multi-block polymers may be utilized which are linear or radial symmetric or asymmetric and which have structures represented by the formulae A-B, A-B-A, A-B-A-B, B-A-B, etc. wherein A is a polymer block of styrene monomer and B is a polymer block of a conjugated diene. Conjugated dienes which may be employed in the manufacture of said block copolymers include those containing from about 4 to about 10 carbon atoms, and preferably those including from 4 to 6 carbon atoms. Examples are 1,3-butadiene, 2-methyl-1,3-butadiene (isoprene), 2,3-dimethyl-1,3-butadiene, 1,3-pentadiene, 1,3-hexadiene, or their mixtures. The preferred ones are however 1,3-butadiene and isoprene. Specific examples of diblock copolymers include styrene-butadiene, styrene-isoprene and the hydrogenated derivatives thereof. Examples of triblock copolymers include styrene-butadiene-styrene, styrene-isoprene-styrene, α-methyl-styrene-butadiene-α-methyl-styrene, α-methyl-styrene-isoprene-α-methyl-styrene, and their partially hydrogenated derivatives. It is also possible to use blends of diblock with triblock copolymers, such as blends of SB and SBS copolymers. Radial or starblock copolymers can also be employed. All these copolymers are commercially available from a number of sources including Shell (under the trademark Kraton™), Phillips, Atofina, BASF, etc. These block copolymers may be partially or selectively hydrogenated, wherein the diene portion or part of it is hydrogenated while the styrene portion is not significantly hydrogenated (SEBS copolymers).

The styrene copolymers, including the styrene block copolymers, can be modified by either grafting or copolymerizing therein a carboxylic acid unit (e.g., maleic or fumaric acid) or a functional derivative thereof. In a preferred embodiment the modified styrene-based polymers are the anhydride-modified styrene-based polymers characterized by the presence of anhydride functionalities, even more preferably of maleic anhydride functionalities, introduced by copolymerisation or, more preferably, by grafting. These modified styrene-based polymers will typically contain from about 0.05 to about 20 %, preferably from about 0.1 to about 10 % by weight, and more preferably from about 0.2 to about 8 % by weight, based on the total weight of the modified resin, of the grafted modifying agent. Preferred modified styrene-based polymers are modified polystyrene, modified HIPS, and modified styrene block copolymers, whereas these last ones are mostly preferred.

In the multi-layer film of the embodiment of Fig. 1, the bonding layer 3 will amount to at least 35 % by weight, preferably at least 38 % by weight and even more preferably at least 40 % by weight, of the overall amount of the gas-barrier film 10. At least part of the styrene-based polymers of said layer 3 will be modified styrene-based polymers and said modified styrene-based polymers will be contained in said layer in such an amount that the ratio between the amount of said modified styrene-based resins and the amount of the gas-barrier resin of the core layer is of at least 0.1 : 1, preferably at least 0.3 : 1, and even more preferably at least 0.5 : 1.

In the embodiment of Fig. 2 a tie layer 4 is positioned between the gas-barrier layer 2 and the heat-sealable layer 1. Said tie layer can be of any of the conventional polyolefin based tie resins, such as for instance modified polyethylene, modified linear polyethylene, modified EVA, or blends thereof. However, in order to control the overall amount of styrene-based polymers in the structure and the ratio of modified styrene-based polymers with respect to the barrier resin, in a preferred embodiment said tie layer 4 comprises modified styrene-based polymers. In this preferred embodiment the modified styrene polymers may be admixed with modified polyolefins and/or be diluted with one or more styrene-based polymers. Thickness of said tie layer 4 will generally be of the order of few microns, e.g., 1 to 6 µm, preferably 2 to 5 µm, wherein the upper limit will mainly be dictated by the high costs of these materials.

In the embodiment represented in Fig. 2, still some amount of modified styrene-based resin needs to be present in bonding layer 3 to provide for a good adhesion of said layer to the gas-barrier layer 2 and, if necessary, also to reach the required ratio between the overall amount of modified styrene-based polymer and the amount of gas-barrier resin. The thickness of bonding layer 3 in the embodiment of Fig. 2 will be set in such a way that the overall amount of styrene-based polymers (thus including the amount contained in the tie layer 4) reaches at least 35 %.

The embodiment of Fig. 3 represents a preferred embodiment of the present invention in the gas-barrier film aspect. It includes a tie layer 4 positioned between the gas-barrier layer 2 and the heat-sealable layer 1 and another tie layer 4' positioned between the gas-barrier layer 2 and the bonding layer 3. In said preferred embodiment, at least tie layer 4' but preferably also tie layer 4, comprise modified styrene-based polymers. In a most preferred embodiment at least tie layer 4', but preferably also tie layer 4, will be of modified styrene-based polymers optionally diluted with one or more styrene-based polymers. While the composition of the tie layers 4 and 4' does not need to be the same, in a further preferred embodiment these two tie layers 4 and 4' have the same composition.

In the preferred embodiment represented in Fig. 3, the bonding layer 3 does not need to contain modified styrene-based resins unless the amount contained in tie layers 4 and 4' is not sufficient to reach the desired ratio with respect to the amount of gas-barrier resin of layer 2. Also in this case the thickness of the bonding layer 3 will be set to reach a total amount of styrene-based resin in the overall film of at least 35%.

In line of principle other layers might be present in the gas-barrier film if desired.

As an example a "seal-assisting" layer may be present as a core layer directly adhered to the heat-sealable layer to improve the seal performance of the end substrate/film composite; or, alternatively, a cohesive failure layer can be present as a core layer directly adhered to the heat-sealable layer to give an easy opening feature to the end package; or, still alternatively, a sticky layer can be present as a core layer directly adhered to the heat-sealable layer to give a reclosable package. In all these cases the thickness of the heat-sealing layer is reduced but to have the desired high level of recyclability of the end composite the conditions indicated before are still to be satisfied.

The overall thickness of the gas-barrier film of the invention is comprised between about 10 and about 100 µm, preferably between about 15 and about 80 µm, and more preferably between about 20 and about 60 µm. In particular when the film is laminated to a polystyrene substrate and the end composite will not be thermoformed but just cut to form flat backings, low thicknesses of the gas-barrier liner are preferred, while when the substrate/film composite will be thermoformed, then thicker gas-barrier liners are preferred. More particularly it has been found that multi-layer gas-barrier films with a thickness in the range comprised between about 20 and about 30 µm are suitable for most of the current applications.

One or more of any of the layers of the gas-barrier film of the present invention may include appropriate amounts of additives typically included in food packaging films for the desired effect, as is known to those of skill in the art. For example, a layer may include additives such as slip agents, antiblock agents, antioxidants, fillers, pigments and dyes, radiation stabilizers, antistatic agents, cross-linking inhibitors or cross-linking enhancers, anti-fog agents, and the like.

The gas-barrier film of the present invention is preferably obtained by any suitable co-extrusion process, either through a flat or a round extrusion die.

Alternatively the gas-barrier film of the invention can be obtained through extrusion coating, where one or more layers are simultaneously or sequentially extruded on a pre-formed sheet of the other film layer(s).

Still alternatively lamination, such as heat lamination or glue lamination, could be employed for the manufacture of the gas-barrier film 10 starting from separate pre-formed film layers.

The gas-barrier film of the present invention, or only one or more of the thermoplastic layers thereof, may be cross-linked to e.g. improve the strength of the film and/or help to avoid burn through during heat seal operations. Cross-linking may be achieved by using chemical additives or by subjecting the film layers to an energetic radiation treatment, such as a high energy electron beam treatment, to induce cross-linking between molecules of the irradiated material.

While the gas-barrier film of the present invention may be mono- or bi-axially oriented, i.e. oriented in either the machine or transverse direction, or both, to give heat-shrinkable films, or oriented and then heat-set to give heat-stable oriented film with improved strength and durability, preferably, for use in the manufacture of a substrate/film composite as described in the present invention, the gas-barrier film 10 is substantially non oriented.

Preferably therefore the gas-barrier films of the first object of the present invention are manufactured by cast coextrusion or by hot blown.

For the manufacture of the substrate/film composite that represents the second object of the present invention, the gas-barrier film 10 can be directly laminated to a polystyrene substrate 5. Any solid sheet of any styrene-based polymer can be a suitable polystyrene substrate. A highly preferred polystyrene substrate is however represented by a foamed polystyrene sheet. Said polystyrene substrate may be of virgin polymer but in a preferred embodiment it will comprise reclaim material from the composite. Preferably it will comprise > 20 % by weight, more preferably > 30 %, even more preferably > 40 %, yet even more preferably > 50 %, and still even more preferably > 60 % by weight of reclaim from the substrate/film composite itself.

The thickness of the polystyrene substrate 5 should be suitably selected depending on the type of material employed for the substrate, the end use of the composite and its requirement in terms of rigidity and formability.

In particular if the substrate 5 is a solid polystyrene layer and the final use of the composite involves a thermoforming step, typical thicknesses of the substrate will be from about 150 to about 2,000 µm, preferably from about 200 to about 1,500 µm, and more preferably from about 250 to about 1,000 µm; if foam material is employed and the final use of the composite involves a thermoforming step, the substrate thickness is preferably comprised between about 1,000 and about 6,000 µm. Thicker layers however can be employed, if needed to get the required stiffness, provided that the end multi-layer sheet can still be formed into a receptacle of the desired shape. If no thermoforming step is devised, thicker structures can be employed.

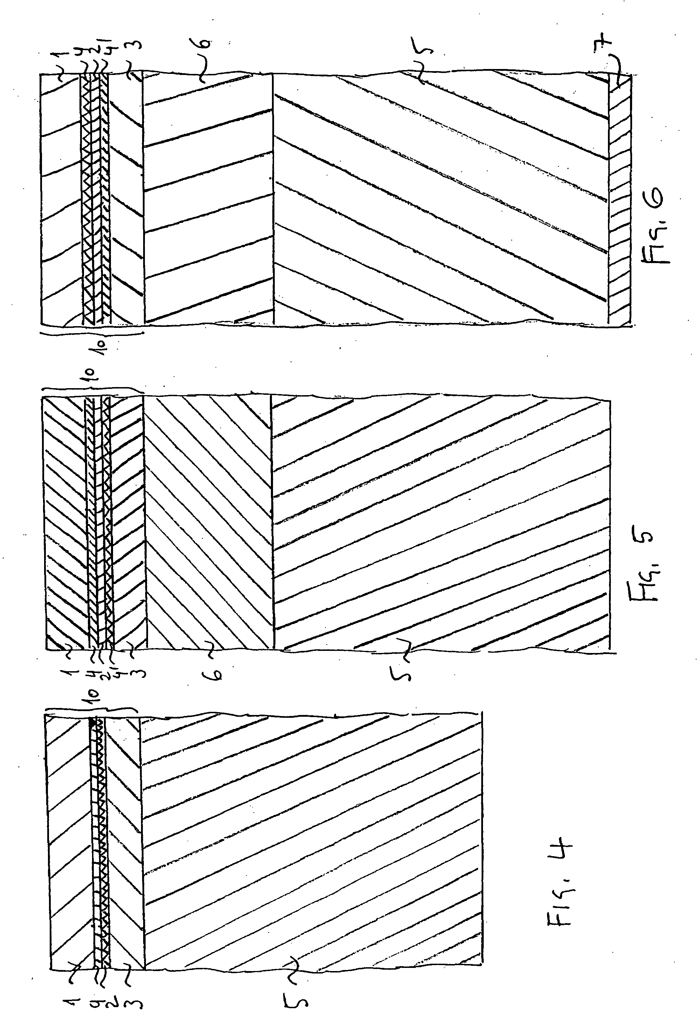

The substrate/film composite illustrated in Fig. 4 represents the composite of a polystyrene substrate 5 directly laminated with the film 10 of the embodiment illustrated in Fig.2.

It is also possible to laminate the polystyrene substrate 5 to the gas-barrier film 10 with the intermediate of an additional layer used to improve the bond between the substrate and the film and/or to improve the impact resistance properties of the overall structure. Said additional intermediate layer is indicated in the preferred embodiment of Fig. 5 as layer 6. It can comprise a styrene-based polymer or/and a modified styrene-based polymer. Examples of preferred resins that can suitably be employed for said intermediate layer 6 are polystyrene, oriented polystyrene, high impact polystyrene, oriented high impact polystyrene, styrene block copolymers, modified polystyrene, modified high impact polystyrene, modified styrene block copolymers, and blends thereof in any proportion. The thickness of said intermediate layer 6 can vary widely depending also on its composition and its scope; more particularly, if layer 6 is used only to improve the bond between the substrate and the liner, it will comprise a modified styrene-based resin and its thickness will generally be not more than 10-15 µm, preferably comprised between 1 and 10 µm, while if it used to improve the mechanical properties of the overall structure, it will mainly comprise styrene-based resins, such as HIPS, and styrene block copolymers, and its thickness can be e.g, up to 40, 60, 80 µm or even more.

Lamination of the gas-barrier film 10 to the substrate 5, with or without the presence of the intermediate layer 6, is preferably obtained by heat lamination. Heat lamination involves passing the sheets of the end composite, wherein at least part of them is preferably pre-heated, between heated steel rolls pressing them together. Typically the temperature of the steel rolls is comprised between about 70 and about 130 °C, preferably between about 80 and about 120 °C, and even more preferably between about 90 and about 110 °C. The amount of pressure suitable to manufacture the composite should be enough to create a bond between the pressed sheets that would not fail after conventional thermoforming conditions. Lower temperatures and/or lower pressure values might be employed if the surfaces of the sheets to be bound together in the composite are submitted to a corona treatment before the lamination step.

While a single lamination step is convenient, it is also possible to laminate the substrate 5, or the gas-barrier film 10, to the intermediate layer 6 and successively laminate the thus obtained intermediate to the gas-barrier film 10, or to the substrate 5, respectively. The conditions for each of the separate lamination steps are essentially as described above.

Particularly when the substrate 5 is of foam polystyrene, it may be advantageous to laminate, on its outer surface opposite to the surface where the gas-barrier liner is laminated, a layer of solid styrene-based polymer or, even more preferably, a layer of HIPS or of oriented polystyrene or oriented HIPS.

This embodiment is illustrated in Fig. 6 where said outermost layer is indicated with the numeral 7. Also in this embodiment the outermost layer 7 and the gas-barrier liner 10 (with or without the presence of the intermediate layer 6) can be heat-laminated to the substrate 5 in a single step or in a series of subsequent lamination steps. The general conditions for the heat-lamination are indicated above and can anyway be easily adjusted by the person skilled in the art of lamination. Glue lamination is also possible.

As indicated above, in a preferred embodiment the substrate 5 comprises reclaim material from the manufacture of the composite. To obtain the reclaim containing substrate, scrap generated during manufacture of the composite is gathered, ground, and pelletized to create reclaim pellets.

Said reclaim pellets are then placed in a hopper, optionally admixed with virgin resin pellets of the substrate material, and recycled.

When, according to a most preferred embodiment the substrate 5 is of foamed polystyrene, the reclaim pellets possibly admixed with the virgin polystyrene pellets are suitably compounded with the additives conventionally employed in the extrusion foaming processes (e.g. nucleating agents, foam cell control agents, etc.) and the resulting mixture is finally fed to an extruder and foam extruded by means of the suitably selected blowing agent.

Not all the reclaim is necessarily recycled in the substrate. Actually part of the reclaim can be put into a layer of the gas-barrier film other than the gas-barrier layer and/or in the intermediate layer 6, if any, and/or in outer coating layer 7 possibly present. Said layers can be made of a mixture of reclaim material and virgin resin or of 100 % reclaim.

In a preferred embodiment however all the scrap will be recycled in the substrate.

In a preferred embodiment the overall process is a close-loop process where all the scrap generated is recycled into the structure. As the amount of scrap generated in this process is about 60-65 % by weight with respect to the weight of the substrate, about 35-40 % by weight of the resin used in the extrusion foaming will be virgin resin.

The substrate/gas-barrier film composite according to the present invention is then generally thermoformed, to give gas-barrier foam trays or backings of the desired shape and size.

Further specific objects of the present invention are therefore the receptacles for food packaging obtained from the substrate/film composition of the invention.

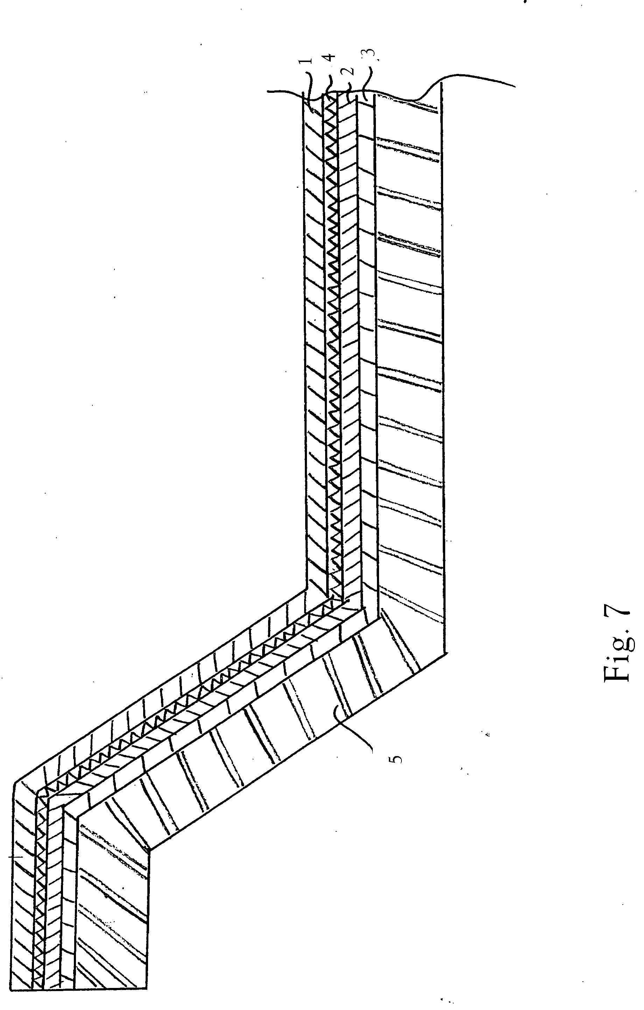

In a preferred embodiment said receptacle has the shape of a tray, comprising a bottom portion and side walls integral with said bottom and with each other defining a storage compartment, and the flange extends outwardly from the top edges of the side walls, typically in a plane substantially parallel to that of the bottom portion, wherein the heat-sealable layer 1 is the layer in contact with the food to be packaged. Said embodiment is illustrated in Fig. 7

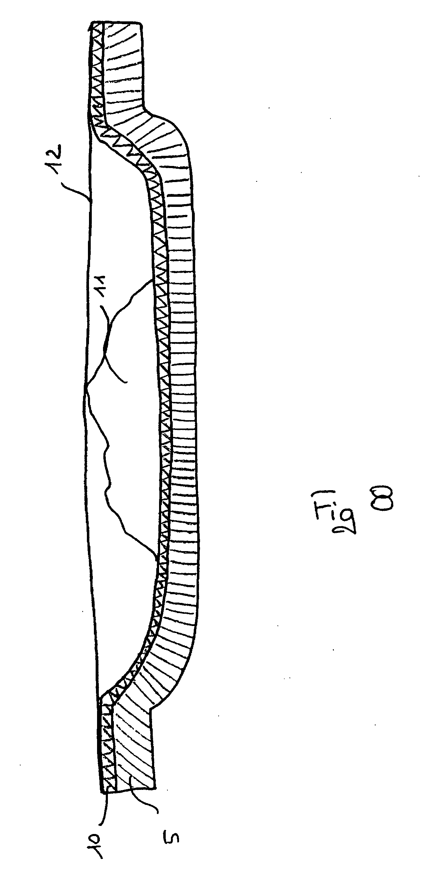

In another embodiment of the present invention, the receptacle is an almost flat or slightly shallowed support, i.e. a dish-shape receptacle, that may have e.g. a rectangular, round, oval or squared surface wherein the outward edge of said flat support can be used as the receptacle flange. A package obtained by following the method described in EP-B-964,822 and using a composite of the invention as the backing, is illustrated in Fig. 8. In this Figure the product to be packaged is indicated with the numeral 11 and the heat-shrinkable film that is sealed along the edges of the backing (along the flange) and that is tensioned over the product thus keeping it in place, is indicated by the numeral 12.

The gas-barrier films 10 according to the present invention proved to have good heat-sealability and barrier properties, when laminated to polystyrene substrates containing high percentages by weight of reclaim from the manufacture of the composites. Furthermore the substrate/film composite of the present invention containing reclaim material from the composite itself, have shown to maintain the same mechanical properties and packaging performances of the corresponding composites made with no reclaim material.

The following Examples further illustrates the invention in some representative embodiments thereof.

### Examples 1 to 7

The gas-barrier films of the following general structure
A/B/C/D/E
have been obtained by co-extrusion in a hot blown line.

In Table 1 of next page the resins used for the various layers are indicated by a code which is explained at the bottom of the table itself and, between parentheses, the thickness of each layer is reported.

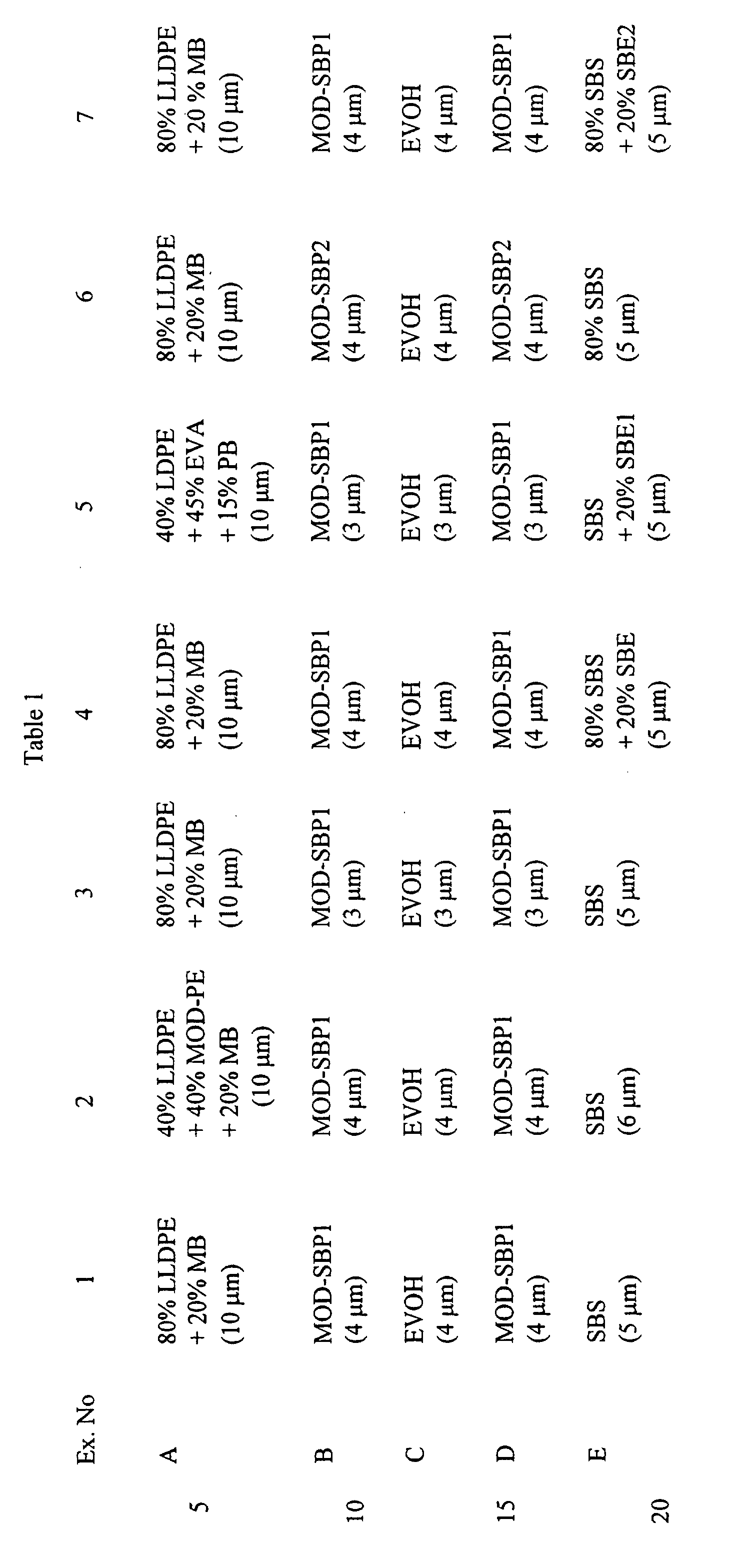

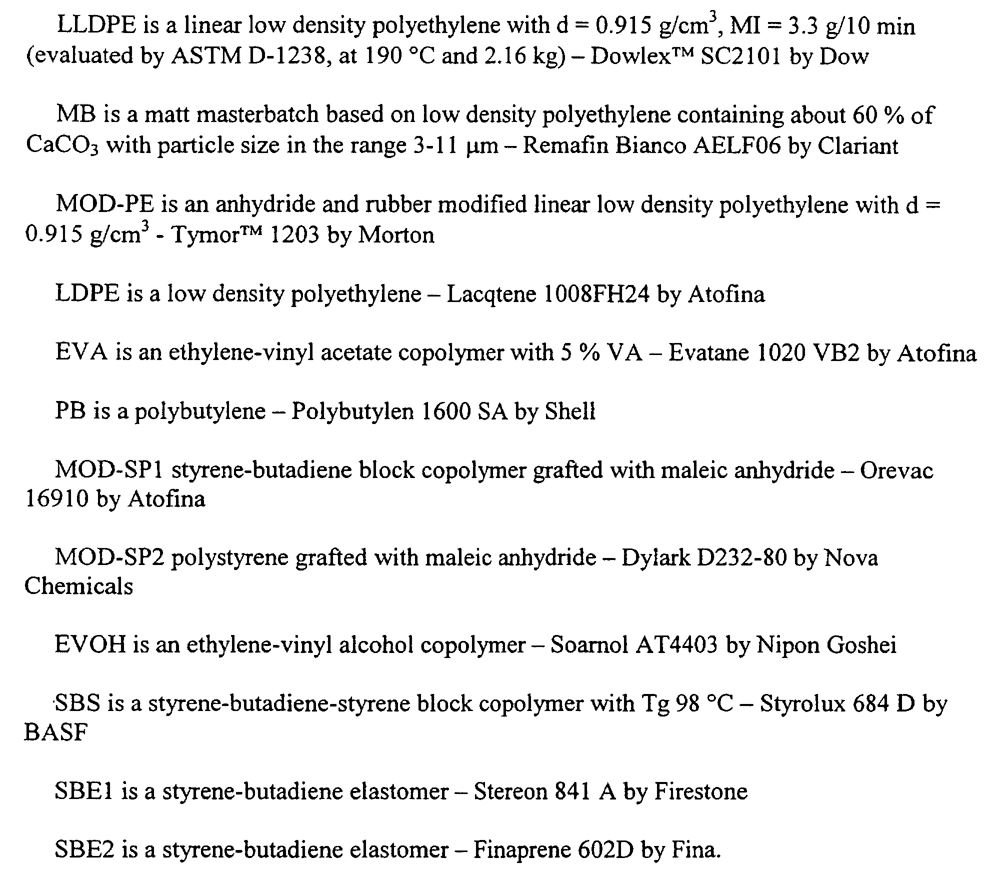

The above films are heat laminated on a standard polystyrene foam sheet of 3,000 µm of thickness. The obtained laminates are then thermoformed using conventional conditions.

The mechanical properties and the packaging performances of the trays containing up to 65 % of reclaim are evaluated and no significative differences are found with the corresponding structures where virgin polystyrene is used for the substrate.

## Claims

1. A gas-barrier multi-layer film having an overall thickness comprised between 10 and 100 µm, comprising at least an outer heat-sealable polyolefin layer, a core gas-barrier layer comprising one or more of EVOH and/or polyamides, and an outer bonding layer comprising one or more styrene-based polymers, said film being **characterized in that**
a) at least 35 % by weight of the overall film is of styrene-based polymers,
b) at least part of these "styrene-based polymers" are in the form of styrene-based polymers, modified by the presence of a polar group, and
c) said modified styrene-based polymers are present in a ratio, with respect to the weight of the gas-barrier resin of the core layer, of at least 0.1 : 1.

2. The film of claim 1 wherein the modified styrene-based polymers are anhydride grafted styrene-based polymers.

3. The film of claim 2 wherein the modified styrene-based polymers are maleic anhydride modified styrene block copolymers.

4. The film of any of claims 1 to 3 further **characterised in that**
a) at least 38 % by weight of the overall film is of styrene-based polymers.

5. The film of claim 4 further **characterised in that**
a) at least 40 % by weight of the overall film is of styrene-based polymers.

6. The film of any of claims 1 to 6 further **characterised in that**
c) the modified styrene-based polymers are present in a ratio, with respect to the weight of the gas-barrier resin of the core layer of at least 0.3:1.

7. The film of claim 6 further **characterised in that**
c) the modified styrene-based polymers are present in a ratio, with respect to the weight of the gas-barrier resin of the core layer of at least 0.5:1.

8. A substrate/film composite comprising a substrate comprising styrene-based polymers and a gas-barrier multi-layer film of any of preceding claims 1 to 7.

9. The substrate/film composite of claim 8 wherein the substrate comprises foamed polystyrene.

10. The substrate/film composite of claims 8 or 9 wherein the substrate contains from 0.001 % up to 100 % by weight of reclaim of the composite.

11. The substrate/film composite of claim 10 wherein the substrate comprises > 20 % by weight of reclaim from the substrate/film composite.

12. The substrate/film composite of claim 11 wherein the substrate comprises > 30 % of reclaim from the substrate/film composite.

13. The substrate/film composite of claim 12 wherein the substrate comprises > 40 % of reclaim from the substrate/film composite.

14. The substrate/film composite of claim 13 wherein the substrate comprises > 50 % of reclaim from the substrate/film composite.

15. The substrate/film composite of claim 14 wherein the substrate comprises > 60 % of reclaim from the substrate/film composite.

16. Use of the substrate/film composite of any of preceding claims 8 to 15 in the manufacture of gas-barrier receptacles or supports for use in food packaging processes.

## Patentansprüche

1. Gasbarriere-Mehrschichtfolie mit einer Gesamtdicke zwischen 10 und 100 µm, die mindestens eine äußere heißsiegelbare Polyolefinschicht, eine Gasbarriere-Kernschicht, die ein oder mehrere von EVOH und/oder Polyamiden umfasst, und eine äußere Bindungsschicht umfasst, die ein oder mehrere auf Styrol basierende Polymere umfasst, wobei die Folie **dadurch gekennzeichnet ist, dass**
a) mindestens 35 Gew.% der Gesamtfolie aus auf Styrol basierenden Polymeren bestehen,
b) mindestens ein Teil dieser "auf Styrol basierenden Polymere" in Form von auf Styrol basierenden Polymeren modifiziert durch die Anwesenheit einer polaren Gruppe vorliegt und
c) die modifizierten auf Styrol basierenden Polymere in Bezug auf das Gewicht des Gasbarriereharzes der Kernschicht in einem Verhältnis von mindestens 0,1:1 vorhanden sind.

2. Folie nach Anspruch 1, bei der die modifizierten auf Styrol basierenden Polymere Anhydrid gepfropfte, auf Styrol basierende Polymere sind.

3. Folie nach Anspruch 2, bei der die modifizierten auf Styrol basierenden Polymere mit Maleinsäureanhydrid modifizierte Styrolblockcopolymere sind.

4. Folie nach einem der Ansprüche 1 bis 3, **dadurch gekennzeichnet, dass**
a) mindestens 38 Gew.% der Gesamtfolie aus auf Styrol basierenden Polymeren sind.

5. Folie nach Anspruch 4, **dadurch gekennzeichnet, dass**
a) mindestens 40 Gew.% der Gesamtfolie aus auf Styrol basierenden Polymeren sind.

6. Folie nach einem der Ansprüche 1 bis 5, **dadurch gekennzeichnet, dass**
a) die modifizierten auf Styrol basierenden Polymere in Bezug auf das Gewicht des Gasbarriereharzes der Kernschicht in einem Verhältnis von mindestens 0,3:1 vorhanden sind.

7. Folie nach Anspruch 6, **dadurch gekennzeichnet, dass**
c) die modifizierten auf Styrol basierenden Polymere in Bezug auf das Gewicht des Gasbarriereharzes der Kernschicht in einem Verhältnis von mindestens 0,5:1 vorhanden sind.

8. Substrat/Folie-Verbund, der ein auf Styrol basierende Polymere umfassendes Substrat und eine Gasbarriere-Mehrschichtfolie gemäß einem der vorangehenden Ansprüche 1 bis 7 umfasst.

9. Substrat/Folie-Verbund nach Anspruch 8, bei dem das Substrat geschäumtes Polystyrol umfasst.

10. Substrat/Folie-Verbund nach Anspruch 8 oder 9, bei dem das Substrat 0,001 bis zu 100 Gew.% Regenerat des Verbunds enthält.

11. Substrat/Folie-Verbund nach Anspruch 10, bei dem das Substrat mehr als 20 Gew.% Regenerat von dem Substrat/Folie-Verbund umfasst.

12. Substrat/Folie-Verbund nach Anspruch 11, bei dem das Substrat mehr als 30% Regenerat von dem Substrat/Folie-Verbund umfasst.

13. Substrat/Folie-Verbund nach Anspruch 12, bei dem das Substrat mehr als 40% Regenerat von dem Substrat/Folie-Verbund umfasst.

14. Substrat/Folie-Verbund nach Anspruch 13, bei dem das Substrat mehr als 50% Regenerat von dem Substrat/Folie-Verbund umfasst.

15. Substrat/Folie-Verbund nach Anspruch 14, bei dem das Substrat mehr als 60% Regenerat von dem Substrat/Folie-Verbund umfasst.

16. Verwendung des Substrat/Folie-Verbunds gemäß einem der vorangehenden Ansprüche 8 bis 15 bei der Herstellung von Gasbarrierebehältern oder -trägern zur Verwendung in Nahrungsmittelverpackungsverfahren.

## Revendications

1. Un film multicouche de barrière aux gaz présentant une épaisseur globale comprise entre 10 et 100 µm, comprenant au moins une couche externe de polyoléfine thermosoudable, une couche centrale de barrière aux gaz comprenant un ou plusieurs parmi des EVOH et/ou des polyamides, et une couche externe de liaison comprenant un ou plusieurs polymères à base de styrène, ledit film étant **caractérisé en ce que**
a) au moins 35% en poids du film global est en polymères à base de styrène,
b) au moins une partie de ces "polymères à base de styrène "sont sous la forme de polymères à base de styrène modifiés par la présence d'un groupe polaire, et
c) lesdits polymères à base de styrène modifiés sont présents dans un rapport, par rapport au poids de la résine de barrière aux gaz de la couche centrale, d'au moins 0,1:1.

2. Le film de la revendication 1, dans lequel les polymères à base de styrène modifiés sont des polymères à base de styrène greffés d'anhydride.

3. Le film de la revendication 2, dans lequel les polymères à base de styrène modifiés sont des polymères bloc de styrène modifiés à l'anhydride maléique.

4. Le film de l'une quelconque des revendications 1 à 3 **caractérisé en outre en ce que**
a) au moins 38% en poids du film global est constitué par des polymères à base de styrène.

5. Le film de la revendication 4, **caractérisé en outre en ce que**
a) au moins 40% en poids du film global est constitué par des polymères à base de styrène.

6. Le film de l'une quelconque des revendications 1 à 6 **caractérisé en outre en ce que**
c) les polymères à base de styrène modifiés sont présents dans un rapport, par rapport au poids de la résine de barrière aux gaz de la couche centrale, d'au moins 0,3:1.

7. Le film de la revendication 6 **caractérisé en outre en ce que**
c) les polymères à base de styrène modifiés sont présents dans un rapport, par rapport au poids de la résine de barrière aux gaz de la couche centrale, d'au moins 0,5:1.

8. Un composite substrat/film comportant un substrat comprenant des polymères à base de styrène et un film multicouche de barrière aux gaz de l'une quelconque des revendications 1 à 7 précédentes.

9. Le composite substrat/film de la revendication 8 dans lequel le substrat comprend du polystyrène en mousse.

10. Le composite substrat/film de la revendication 8 ou 9, dans lequel le substrat contient de 0,001% jusqu'à 100% en poids de régénéré du composite.

11. Le composite substrat/film de la revendication 10 dans lequel le substrat comprend > 20% en poids de régénéré du composite substrat/film.

12. Le composite substrat/film de la revendication 11 dans lequel le substrat comprend > 30% de régénéré du composite substrat/film.

13. Le composite substrat/film de la revendication 12 dans lequel le substrat comprend > 40% de régénéré du composite substrat/film.

14. Le composite substrat/film de la revendication 13 dans lequel le substrat comprend > 50% de régénéré du composite substrat/film.

15. Le composite substrat/film de la revendication 14 dans lequel le substrat comprend > 60% de régénéré du composite substrat/film.

16. Utilisation du composite substrat/film de l'une quelconque des revendications 8 à 15 précédentes dans la fabrication de récipients ou de supports de barrière aux gaz utilisables dans des processus d'emballage de produits alimentaires.
